# EUROPÄISCHE PATENTSCHRIFT

(11) **EP 2 832 280 B1**
(45) Veröffentlichungstag und Bekanntmachung des Hinweises auf die Patenterteilung: **04.05.2016**
(21) Anmeldenummer: 14001011.7
(22) Anmeldetag: 19.03.2014
(51) Int. Cl.: A47L 15/48

(54) **Nebelkammer**
Cloud chamber
Chambre à brouillard

(30) Priorität: 30.07.2013 DE 102013012572
(43) Veröffentlichungstag der Anmeldung: 04.02.2015
(73) Patentinhaber: Sanhua AWECO Appliance Systems GmbH, 88099 Neukirch (DE)
(72) Erfinder: Eichholz, Heinz-Dieter, Dr., 58642 Iserlohn (DE)
(74) Vertreter: Otten, Roth, Dobler & Partner mbB Patentanwälte

(56) Entgegenhaltungen:
- EP-A1- 1 500 739
- EP-A1- 1 983 091
- WO-A1-02/03002
- WO-A2-2004/056448
- DE-A1-102010 047 058
- US-A- 2 843 943

## Beschreibung

Die Erfindung betrifft eine Haushaltsmaschine mit einer Trocknungsvorrichtung, wie ein Geschirrspüler, einen Wäschetrockner, eine Waschmaschine oder dergleichen, nach dem Oberbegriff des Anspruchs 1.

Eine Haushaltsmaschine mit einer Trocknungsvorrichtung wurde beispielsweise in der Druckschrift DE 2010 047 058 A1 oder DE 10 2011 117 734 A1 beschrieben.

Ein Problem bei der Realisierung einer solchen Haushaltsmaschine bzw. Trocknungsvorrichtung besteht darin, einerseits eine hohe Kontaktoberfläche zwischen der hygroskopischen Flüssigkeit und der zu trocknenden Luft vorzusehen und andererseits nach dem Entzug der Flüssigkeit aus der Luft die hygroskopische Flüssigkeit wieder einzusammeln und einem Vorratsdepot zuzuführen.

Die oberflächenvergrößernde Flüssigkeit führt zu immer kleineren Tröpfchen, die letztendlich ein Aerosol bilden können. Je kleiner die Flüssigkeitströpfchen sind, umso problematischer gestaltet sich die Abscheidung aus der getrockneten Luft.

Aus der EP 1 938 091 A1 ist ein Trocknungssystem und aus der WO 2004/056448 A2 ist ein Aerosolabscheider bekannt.

Aufgabe der Erfindung ist es daher, eine Vorrichtung nach dem Oberbegriff des Anspruchs 1 vorzuschlagen, bei der eine effektive Trocknung in vergleichsweise kurzer Zeit möglich ist.

Dies wird erfindungsgemäß durch die kennzeichnenden Merkmale des Anspruchs 1 erreicht. Durch die in den Unteransprüchen genannten Maßnahmen sind vorteilhafte Ausführungen und Weiterbildungen der Erfindung möglich.

Dementsprechend zeichnet sich eine erfindungsgemäße Haushaltsmaschine dadurch aus, dass mehrere Kontaktkammern und/oder Kontaktkammerbereiche/-zonen vorgesehen sind. Hiermit können in jeder Kontaktkammer separate bzw. optimale Trocknungsbedingungen bei unterschiedlichen Trocknungsparametern bzw. Trocknungsvorgängen vorgesehen werden. Beispielweise kann eine Vortrocknung in einer ersten Kontaktkammer und/oder eine Haupttrocknung in einer zweiten Kontaktkammer und/oder eine Nachtrocknung in einer dritten Kontaktkammer und/oder es kann eine Beregnungskammer und/oder eine Nebelkammer vorgesehen werden. Auch kann eine vorteilhafte Anpassung der Kontaktkammern an unterschiedliche Reinigungs- und/oder Wasch- bzw. Spülzyklen der Haushaltsmaschine vorgesehen werden.

Gemäß der Erfindung ist wenigstens eine Düse zur Vernebelung der hygroskopischen Flüssigkeit in der Kontaktkammer und/oder zur Beregnung der Kontaktkammer durch die hygroskopische Flüssigkeit vorgesehen.

Mit Hilfe der erfindungsgemäßen Düse bzw. Düsen kann ohne großen Aufwand eine besonders feine Verteilung der hygroskopischen Flüssigkeit erreicht werden, so dass eine sehr große aktive Oberfläche generiert wird. So kann die hygroskopische Flüssigkeit als feiner Regen und/oder Nebel bzw. als Dampf im Kontaktraum ausgebildet werden. Dies bewirkt eine besonders effektive Trocknung der zu trocknenden Trocknungsluft in relativ kurzer Zeit.

In einer vorteilhaften Variante der Erfindung ist eine Druckerzeugungseinheit bzw. Pumpe zum Druckbeaufschlagen der hygroskopischen Flüssigkeit vorgesehen. Durch eine vorteilhafte Druckbeaufschlagung der hygroskopischen Flüssigkeit bzw. durch den vorteilhaften Überdruck kann eine besonders effektive Verdüsung bzw. Zerstäubung der hygroskopischen Flüssigkeit in der Kontaktkammer verwirklicht werden. Beispielsweise wird eine Pumpe zum Umpumpen des Spül-/ Reinigungsmediums bzw. -Wassers hierzu verwendet. Durch diese Doppelnutzung einer bereits vorhandenen Komponente kann der konstruktive und wirtschaftliche Aufwand reduziert werden.

Vorteilhafterweise erfüllt die verdüste hygroskopische Flüssigkeit bzw. der generierte feine Regen und/oder Nebel im Wesentlichen das ganze Volumen des Kontaktraumes. Vorzugsweise sind mehrere, insbesondere im Kontaktraum verteilte bzw. voneinander beabstandete Düsen vorgesehen. Hiermit wird eine vorteilhafte Verteilung bzw. Beabstandung der Düsen im Kontaktraum erreicht, so dass eine gleichmäßige bzw. möglichst vollständige Verteilung der verdüsten hygroskopischen Flüssigkeit bzw. des feinen Regen und/oder Nebels realisiert wird. Dies verbessert die Raumausnutzung des Kontaktraumes und führt somit zu einer besonders effektiven und raschen Trocknung.

In einer vorteilhaften Ausführungsform der Erfindung ist wenigstens eine bzw. sind bewegliche Düsen vorgesehen. Hiermit kann auch mit einer einzigen und in besonderer Weise mit mehreren beweglichen Düsen eine vorteilhafte Verteilung der hygroskopischen Flüssigkeit im Kontaktraum bzw. in den Trocknungsluftstrom verwirklicht werden.

Vorteilhafterweise sind wenigstens ein oder mehrere bewegliche Arme mit Düsen vorgesehen. Auch hiermit kann eine vorteilhafte Verteilung der hygroskopischen Flüssigkeit im Kontaktraum umgesetzt werden.

In besonderen Weiterbildungen der Erfindung sind wenigstens eine drehbare Düse und/oder wenigstens eine Fächerdüse vorgesehen. Mit Hilfe eines drehbaren Armes kann ohne großen Aufwand eine bewegliche Düse umgesetzt werden.

Eine Fächerdüse erzeugt in vorteilhafter Weise einen Fächerstrahl, wobei im quer zur Strahlrichtung ausgerichteten Querschnitt betrachtet dessen Breite größer, insbesondere um ein Vielfaches größer, als dessen Tiefe ist. Ein drehbarer Fächerstrahl, der vorzugsweise um seine zentrale Achse dreht, ermöglicht eine vorteilhafte Vermischung, gegebenenfalls eine Verwirbelung mit der zu trocknenden Trocknungsluft.

Vorteilhafterweise ist die Sprührichtung wenigstens einer zur Vernebelung der hygroskopischen Flüssigkeit vorgesehenen Sprühdüse der Strömungsrichtung der Trocknungsluft entgegengerichtet. Mit dieser Maßnahme kann eine besonders effektive Durchmischung der verdüsten hygroskopischen Flüssigkeit bzw. des feinen Regens und/oder Nebelstromes mit der zu trocknenden Trocknungsluft erreicht werden. Zudem wird hiermit erreicht, dass unverdünnte hygroskopische Flüssigkeit mit bereits etwas getrockneter Trocknungsluft in Kontakt gerät und aufgrund bereits aufgenommenen Wassers aus der Trocknungsluft etwas verdünnte hygroskopische Flüssigkeit mit relativ feuchter Trocknungsluft in Kontakt kommt. Hierdurch wird eine besonders hohe Effizienz des Trocknungsvorgangs realisierbar.

Vorzugsweise ist die Sprührichtung quer zur Strömungsrichtung der Trocknungsluft unter einem Winkel zwischen 90° und 180° bezüglich der Strömungsrichtung der Trocknungsluft ausgerichtet. Dies gewährleistet eine vorteilhafte Vermischung der verdüsten hygroskopischen Flüssigkeit mit der zu trocknenden Trocknungsluft.

Vorzugsweise sind unterschiedliche Düsen zur Herstellung unterschiedlicher Tropfengröße vorgesehen. So kann in separaten bzw. benachbarten Bereichen/Zonen einer gemeinsamen Kontaktkammer oder jeweils separat in unterschiedlichen Kontaktkammern unterschiedliche Düsen zur Herstellung unterschiedlich großer Tropfen vorgesehen werden. Bevorzugt sind Düsen zur Herstellung unterschiedlicher Tropfengrößen in unterschiedlichen Kontakträumen untergebracht. Beispielsweise kann wenigstens eine erste Düse eine Beregnung bzw. relativ große Regentropfen generieren und wenigstens eine zweite Düse kann eine Vernebelung mit relativ kleinen Tropfen erzeugen. Hierdurch können gegebenenfalls in Abhängigkeit von unterschiedlichen Trocknungsparametern, z.B. mit großer oder geringerer Brüdenbeladung der zu trocknenden Trocknungsluft, eine Anpassung der Trocknung realisiert werden.

Vorteilhafterweise ist eine Beregnungskammer zur Beregnung des Aerosols mit hygroskopischer Flüssigkeit ale Abscheideraum zum Abscheiden von vernebelten Tröpfchen aus der Trocknungsluft vorgesehen, wobei die Beregnungskammer in Luftströmung hinter einer Verneblungskammer vorgesehen ist. Hiermit kann eine vorteilhafte Entfernung bzw. Abscheidung der hygroskopischen Flüssigkeit aus dem Trocknungsluftstrom erreicht werden. So kann in vorteilhafter Weise die hygroskopische Flüssigkeit mittels einer Beregnung aus dem Luftstrom herausgefilterte werden.

Ein Ausführungsbeispiel der Erfindung ist in der Zeichnung dargestellt und wird anhand der einzigen Figur nachfolgend näher erläutert.

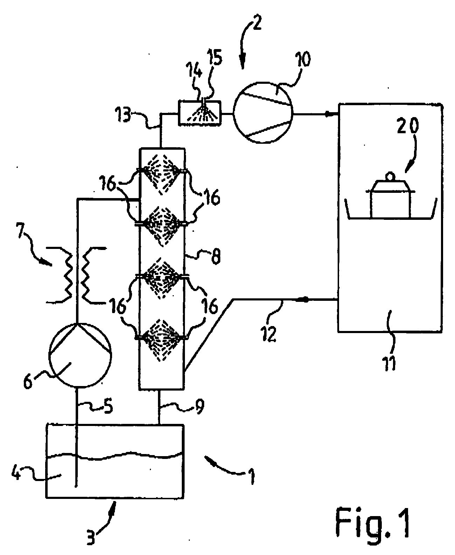

- Figur 1: zeigt einen schematische Aufbau der Trocknungsvorrichtung einer erfindungsgemäßen Haushaltsmaschine.

In Figur 1 ist ein Primärkreislauf 1 sowie einen Sekundärkreislauf 2 für einen Geschirrspüler dargestellt. Der Primärkreislauf 1 umfasst eine hygroskopische Flüssigkeit, beispielsweise eine Lithiumchloridlösung. Der Sekundärkreialauf 2 stellt einen Luftkreislauf mit einer zu trocknenden Trocknungsluft bzw. dem Luftstrom dar.

Der Primärkreislauf 1 umfasst dabei einen Behälter 3, beispielsweise mit Lithiumchloridlösung 4. Die Lithiumchloridlösung 4 kann über eine Leitung 5 mittels einer Pumpe 6, welche als Umwälzpumpe ausgestaltet ist, abgesaugt werden. Die Lösung wird über eine Heizung 7 erwärmt, wodurch Feuchtigkeit entweichen kann und somit das Entzugsmittel, nämlich Lithiumchloridlösung 4 aufkonzentriert werden kann. Ohne nähere Darstellung kann die Heizung 7 alternativ oder in Kombination zur dargestellten Variante auch im/am Behälter 3 zur Erwärmung der Lösung 4 angeordnet werden.

Die Elektrolytlösung 4 gelangt schließlich in eine Kontaktkammer-8, in der der Primärkreislauf 1 mit dem Sekundärkreislauf 2 verbunden ist. In der Kontaktkammer 8 kommt somit die hygroskopische Flüssigkeit, beispielsweise Lithiumchloridlösung, in Kontakt mit der zu trocknenden Luft.

Der Sekundärkreislauf 2 bläst die Trocknungsluft mittels eines Gebläses 10 in den Arbeitsraum 11 des Geschirrspülexs, wo sie feuchtes Geschirr 20 in einem Geschirrkorb trocknet. Aus dem Arbeitsraum 11 wird die Trocknungsluft innerhalb des Sekundärkreislaufs 2 durch den Strömungsantrieb des Gebläses 10 über die Leitung 12 abgesaugt und gelangt in die Kontaktkammer 8.

Die Kontaktkammer 8 umfasst vorzugsweise mehrere Düsen 16 zum Verdüsen der Elektrolytlösung 4, wobei lediglich aus Gründen der Übersichtlichkeit eine Verzweigung der Leitung 5 zu den Düsen 16 nicht näher dargestellt ist.

In der Kontaktkammern 8 wird der Trocknungsluft über das Entzugsmittel 4, das heißt die hygroskopische Flüssigkeit 4, Feuchtigkeit entzogen. Das Entzugsmittel 4 erwärmt sich bei diesem exothermen Vorgang und kann dabei auch wiederum die Trocknungsluft erwärmen.

Über die Luftleitung 13 gelangt die Trocknungsluft zusammen mit Tröpfchen des Entzugsmittels in einen Abscheider 14, der einerseits ebenfalls als Kontaktkammern 14 mit einer Düse 15 im Sinn der Erfindung ausgebildet werden kann und/oder der andererseits eine Abscheidung mittels Kondensation und/oder der mittels einer Wandung eines Filters oder Luftkanals als Abscheideroberfläche die Lösung 4 abscheidet und in nicht näher dargestellter Weise wieder dem Behälter 3 zuleitet.

Im dargestellten Ausftihrungsbeispiel ist der Abscheider 14 als Beregnungskammer 14 ausgebildet, wobei eine Regendüse 15 die Elektrolytlösung 4 als Regen bzw. relativ große Tropfen eindüst. Dieser Regen bildet gegebenenfalls einen Flüssigkeitsvorhang aus, der die fein verteilte Lösung 4 aus dem Luftstrom auswäscht und in vorteilhafter Weise den Luftstrom zusätzlich trocknet.

In der Kontaktkammer 8 mit mehreren Düsen 16 werden vorzugsweise sehr feine Tropfen der Lösung 4 generiert. D.h. dass hierin eine Vernebelung bzw. feine Zerstäubung der Lösung 4 vorgesehen ist, so dass die Kontaktkammer 8 als Nebelkammer 8 ausgebildet ist. Hierin wird in vorteilhafter Weise eine sehr große aktive Oberfläche mittels feinster Tröpfchen der Lösung 4 generiert, was zu einer besonders effektiven und schnellen Trocknung der zu trocknenden Trocknungsluft führt.

Die Erfindung ist nicht auf das dargestellte Ausführungsbeispiel beschränkt, insbesondere ist die Anordnung einer erfindungsgemäßen Trocknung nicht auf eine Kreislaufführung wie in Figur 1 beschränkt. Insbesondere kann die Kontaktkammer 8 beliebig ausgestaltet sein. Auch mechanisch bewegliche Verteilerelemente und/oder Düsen 16 können beispielsweise zur Verteilung des Entzugsmittels 4 in dieser Kammer 8 angeordnet sein. Die beiden Kreisläufe 1 und 2 stellen nur ein Beispiel für die Verwendung einer hygroskopischen Flüssigkeit 4 zur Trocknung von Luft in einer Hauehaltsmaschine dar.

### Hezuqszeichenliste

- 1: Primärkreislauf
- 2: Sekundärkreislauf
- 3: Behälter
- 4: Lithiumchloridlösung
- 5: Leitung
- 6: Pumpe
- 7: Heizung
- 8: Kontaktkammer
- 9: Flüssigkeit
- 10: Gehäuse
- 11: Arbeitsraum
- 12: Luftleitung
- 13: Luftleitung
- 14: Abscheider
- 15: Regendüse
- 16: Düse
- 20: Geschirr

## Patentansprüche

1. Haushaltsmaschine mit Trocknungsvorrichtung, wie ein Geschirrspüler, ein Wäschetrockner, eine Waschmaschine oder dergleichen, wobei die Trocknungsvorrichtung (8) einen Kontaktraum (8, 14) zur Kontaktierung von aus einem Arbeitsraum (11) der Haushaltsmaschine stammender Trocknungsluft mit einer zur Trocknung vorgesehenen hygroskopischen Flüssigkeit (4) aufweist, wobei wenigstens eine Düse (15, 16) zur Vernebelung der hygroskopischen Flüssigkeit (4) in der Kontaktkammer (8, 14) und/oder zur Beregnung der Kontaktkammer (8, 14) durch die hygroskopische Flüssigkeit (4) vorgesehen ist, **dadurch gekennzeichnet, dass** mehrere Kontaktkammern (8, 14) und/oder Kontaktkammerbereiche/-zonen vorgesehen sind.

2. Haushaltsmaschine nach Anspruch 1 **dadurch gekennzeichnet, dass** mehrere Düsen (15, 16) vorgesehen sind.

3. Haushaltsmaschine nach einen der vorgenannten Ansprüche **dadurch gekennzeichnet, dass** bewegliche Düsen (15, 16) vorgesehen sind.

4. Haushaltsmaschine nach einem der vorgenannten Ansprüche **dadurch gekennzeichnet, dass** bewegliche Arme mit Düsen (15 ,16) vorgesehen sind.

5. Haushaltsmaschine nach einem der vorgenannten Ansprüche **dadurch gekennzeichnet, dass** eine drehbare Fächerdüse (15, 16) vorgesehen ist.

6. Haushaltsmaschine nach einem der vorgenannten Ansprüche **dadurch gekennzeichnet, dass** die Sprührichtung wenigstens einer zur Vernebelung der hygroskopischen Flüssigkeit (4) vorgesehenen Düse (15, 16) der Strömungsrichtung der Trocknungsluft entgegengerichtet ist.

7. Haushaltsmaschine nach einem der vorgenannten Ansprüche **dadurch gekennzeichnet, dass** die Sprührichtung quer zur Strömungsrichtung der Trocknungsluft unter einem Winkel zwischen 90° und 180° bezüglich der Strömungsrichtung der Trocknungsluft ausgerichtet ist.

8. Haushaltsmaschine nach einem der vorgenannten Ansprüche **dadurch gekennzeichnet, dass** Düsen (15, 16) zur Herstellung unterschiedlicher Tropfengröße vorgesehen sind.

9. Haushaltsmaschinen nach einem der vorgenannten Ansprüche **dadurch gekennzeichnet, dass** eine Beregnungskammer (14) zur Beregnung des Aerosols mit hygroskopischer Flüssigkeit (4) als Abscheideraum (14) zum Abscheiden von vernebelten Tröpfchen aus der Trocknungsluft vorgesehen ist, wobei die Beregnungskammer (14) in Luftströmung hinter einer Verneblungskammer (8) vorgesehen ist.

10. Haushaltsmaschine nach einem der vorgenannten Ansprüche, **dadurch gekennzeichnet, dass** Düsen (15, 16) zur Herstellung unterschiedlicher Tropfengrößen in unterschiedlichen Kontakträumen (8, 14) untergebracht sind.

## Claims

1. A household machine with drying device, such as a dishwasher, a dryer, a washing machine or the like, wherein the drying device (8) has a contact chamber (8, 14) for contacting drying air coming from a working chamber (11) of the household machine with a hygroscopic liquid (4) provided for the drying, wherein at least one nozzle (15, 16) is provided for the nebulization of the hygroscopic liquid (4) in the contact chamber (8, 14) and/or for sprinkling of the contact chamber (8, 14) by the hygroscopic liquid (4), **characterized in that** several contact chambers (8, 14) and/or contact chamber areas/-zones are provided.

2. A household machine according to Claim 1 **characterized in that** several nozzles (15, 16) are provided.

3. A household machine according to one of the aforementioned claims **characterized in that** movable nozzles (15, 16) are provided.

4. A household machine according to one of the aforementioned claims **characterized in that** movable arms with nozzles (15, 16) are provided.

5. A household machine according to one of the aforementioned claims **characterized in that** a rotatable fan nozzle (15, 16) is provided.

6. A household machine according to one of the aforementioned claims **characterized in that** the spray direction at least of one nozzle (15, 16) provided for the nebulization of the hygroscopic liquid (4) is directed opposite the flow direction of the drying air.

7. A household machine according to one of the aforementioned claims **characterized in that** the spray direction is aimed transversely to the flow direction of the drying air at an angle between 90° and 180° with respect to the flow direction of the drying air.

8. A household machine according to one of the aforementioned claims **characterized in that** nozzles (15, 16) are provided for the production of different droplet sizes.

9. A household machine according to one of the aforementioned claims **characterized in that** a sprinkling chamber (14) for the sprinkling of the aerosol with hygroscopic liquid (4) is provided as a separation chamber (14) for the separation of the nebulized droplets from the drying air, wherein the sprinkling chamber (14) is provided in the air flow behind a nebulization chamber (8).

10. A household machine according to one of the aforementioned claims, **characterized in that** nozzles (15, 16) for the production of different droplet sizes are located in different contact chambers (8, 14).

## Revendications

1. Appareil électroménager avec dispositif de séchage, tel qu'un lave-vaisselle, un sèche-linge, une machine à laver ou similaire, le dispositif de séchage (8) présentant un espace de contact (8, 14) pour la mise en contact d'air de séchage provenant d'un espace de travail (11) de l'appareil électroménager avec un liquide hygroscopique (4) prévu pour le séchage, au moins une buse (15, 16) étant prévue pour la nébulisation du liquide hygroscopique (4) dans la chambre de contact (8, 14) et/ou pour l'arrosage de la chambre de contact (8, 14) par le liquide hygroscopique (4), **caractérisé en ce que** plusieurs chambres de contact (8, 14) et/ou régions/zones de chambre de contact (8, 14) sont prévues.

2. Appareil électroménager selon la revendication 1, **caractérisé en ce que** plusieurs buses (15, 16) sont prévues.

3. Appareil électroménager selon l'une des revendications précitées, **caractérisé en ce que** des buses (15, 16) mobiles sont prévues.

4. Appareil électroménager selon l'une des revendications précitées, **caractérisé en ce que** des bras mobiles avec des buses (15, 16) sont prévus.

5. Appareil électroménager selon l'une des revendications précitées, **caractérisé en ce qu'**une buse en éventail (15, 16) rotative est prévue.

6. Appareil électroménager selon l'une des revendications précitées, **caractérisé en ce que** la direction d'aspersion d'au moins une buse (15, 16) prévue pour la nébulisation du liquide hygroscopique (4) est opposée à la direction d'écoulement de l'air de séchage.

7. Appareil électroménager selon l'une des revendications précitées, **caractérisé en ce que** la direction d'aspersion est orientée transversalement à la direction d'écoulement de l'air de séchage en formant un angle entre 90° et 180° par rapport à la direction d'écoulement de l'air de séchage.

8. Appareil électroménager selon l'une des revendications précitées, **caractérisé en ce que** des buses (15, 16) sont prévues pour la production de grandeurs de gouttes différentes.

9. Appareil électroménager selon l'une des revendications précitées, **caractérisé en ce qu'**il est prévu une chambre d'arrosage (14) pour l'arrosage de l'aérosol avec le liquide hygroscopique (4) en tant qu'espace de séparation (14) pour la séparation de gouttelettes nébulisées à partir de l'air de séchage, la chambre d'arrosage (14) étant prévue dans l'écoulement d'air derrière une chambre de nébulisation (8).

10. Appareil électroménager selon l'une des revendications précitées, **caractérisé en ce que** des buses (15, 16) sont mises en place dans différents espaces de contact (8, 14) pour la production de grandeurs de gouttes différentes.
